# EUROPEAN PATENT APPLICATION

(11) **EP 3 945 724 A1**
(43) Date of publication of application: **02.02.2022**
(21) Application number: 19922383.5
(22) Date of filing: 25.12.2019
(51) Int. Cl.: H04Q 9/00, G06F 13/00

(54) **INFORMATION PROCESSING SYSTEM, INFORMATION PROCESSING APPARATUS AND INFORMATION PROCESSING METHOD**

(30) Priority: 29.03.2019 JP 2019067626
(71) Applicant: Panasonic Intellectual Property Management Co., Ltd., Osaka-shi, Osaka 540-6207 (JP)
(72) Inventor: GOBARA, Kunio, Osaka-shi, Osaka 540-6207 (JP); SHIOTA, Yosuke, Osaka-shi, Osaka 540-6207 (JP); HITOTSUYA, Masashi, Osaka-shi, Osaka 540-6207 (JP); NISHIKAWA, Yoshihiro, Osaka-shi, Osaka 540-6207 (JP); YAMADA, Masazumi, Osaka-shi, Osaka 540-6207 (JP); KATO, Naonori, Osaka-shi, Osaka 540-6207 (JP)
(74) Representative: Vigand, Philippe
(86) International application number: PCT/JP2019/050958
(87) International publication number: WO 2020/202678

(57) **Abstract**

An information processing system (10) includes: a server device (30) that outputs notification information when a predetermined condition is satisfied; and information processing device (40) that communicates with the server device (30). The information processing device (40) includes: an obtainer (41) that obtains the notification information output form the server device (30); an outputter (44) that performs output determined based on the notification information obtained by the obtainer (41); an input receiver (45) that receives an instruction from a user (90) to a device; and an instruction processor (48) that generates a control command to the device. The instruction processor (48) generates the control command based on the instruction and the notification information, when the input receiver (45) receives the instruction after the output is performed.

## Description

### [Technical Field]

The present disclosure relates to an information processing system, an information processing device, and an information processing method.

### [Background Art]

Devices are known which control electronic devices based on input voice (see e.g., Patent Literature (PTL) 1).

### [Citation List]

### [Patent Literature]

[PTL 1] United States Patent No. 10049675

### [Summary of Invention]

### [Technical Problem]

The present disclosure provides an information processing system, an information processing device, and an information processing method capable of assisting control of devices highly conveniently for users.

### [Solution to Problem]

An information processing system according to an aspect of the present disclosure includes: a server device that outputs notification information when a predetermined condition is satisfied; and an information processing device that communicates with the server device. The information processing device includes: an obtainer that obtains the notification information output from the server device; an outputter that performs output determined based on the notification information obtained by the obtainer; and a receiver that receives an instruction from a user to a device. The server device or the information processing device further includes: an instruction processor that generates a control command to the device, and the instruction processor generates the control command based on the instruction and the notification information when the receiver receives the instruction after the output is performed.

An information processing device according to an aspect of the present disclosure includes: an obtainer that obtains notification information output when a predetermined condition is satisfied; an outputter that performs output determined based on the notification information; a receiver that receives an instruction from a user to a device; and an instruction processor that generates a control command to the device. The instruction processor generates the control command based on the instruction and the notification information, when the receiver receives the instruction after the output is performed.

An information processing device according to another aspect of the present disclosure includes: an obtainer that obtains notification information output when a predetermined condition is satisfied; an outputter that performs output determined based on the notification information; and an instruction processor that generates a control command to a device. The instruction processor generates the control command based on the notification information after the output is performed.

An information processing method according to an aspect of the present disclosure includes: obtaining notification information output when a predetermined condition is satisfied; performing output determined based on the notification information; receiving an instruction from a user to a device; and generating a control command to the device. The generating includes generating the control command based on the instruction and the notification information, when the instruction is received after the output is performed.

An aspect of the present disclosure may be implemented as a program that causes a computer to execute the information processing method described above. Alternately, another aspect may be implemented as a non-transitory computer-readable recording medium storing the program.

### [Advantageous Effects of Invention]

The present disclosure assists control of devices highly conveniently for users.

### [Brief Description of Drawings]

[FIG. 1]

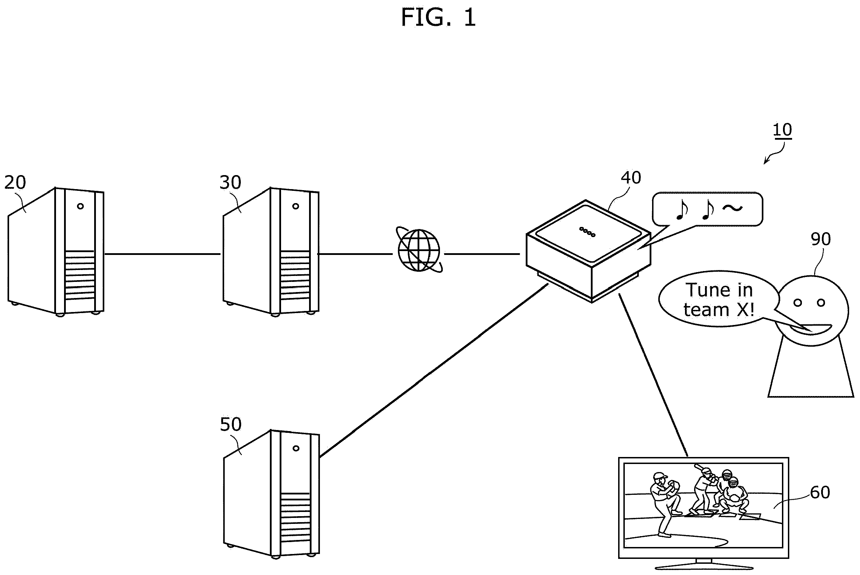

   FIG. 1 shows a configuration of an information processing system according to Embodiment 1.
[FIG. 2]

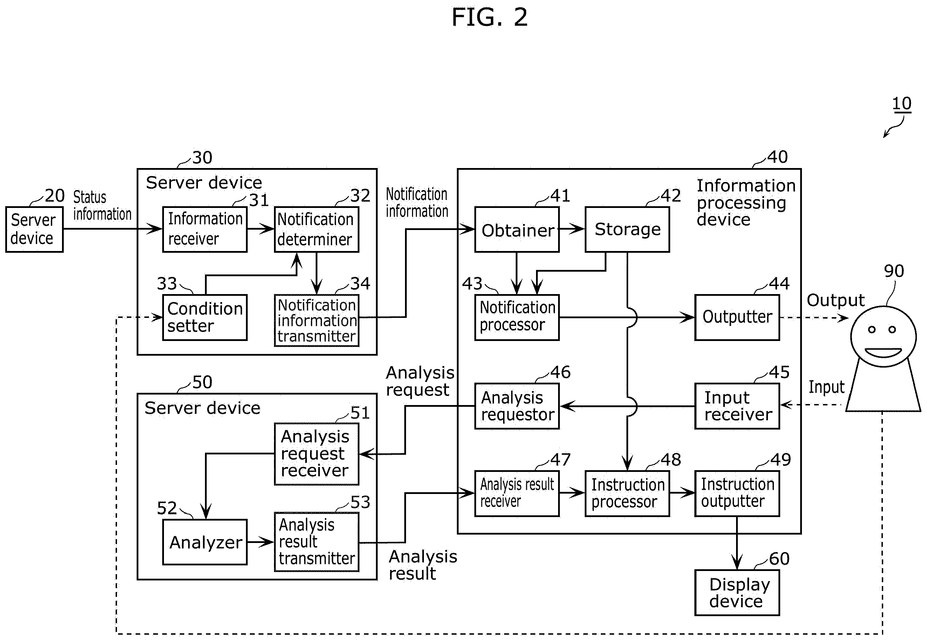

   FIG. 2 is a block diagram showing a functional configuration of the information processing system according to Embodiment 1.
[FIG. 3]

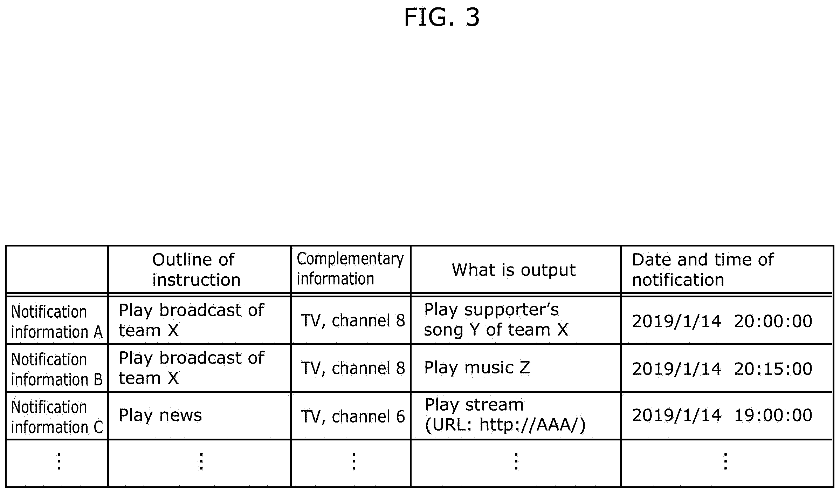

   FIG. 3 shows example items of notification information stored in the storage in the information processing system according to Embodiment 1.
[FIG. 4]

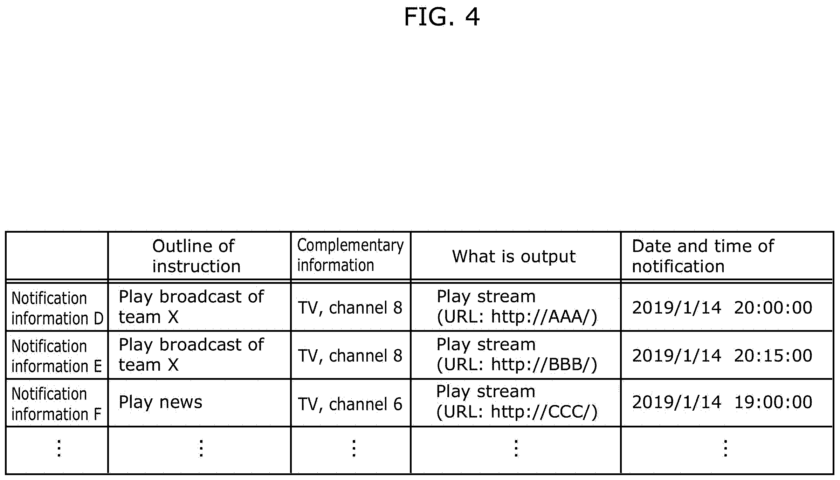

   FIG. 4 shows other example items of notification information stored in the storage in the information processing system according to Embodiment 1.
[FIG. 5]

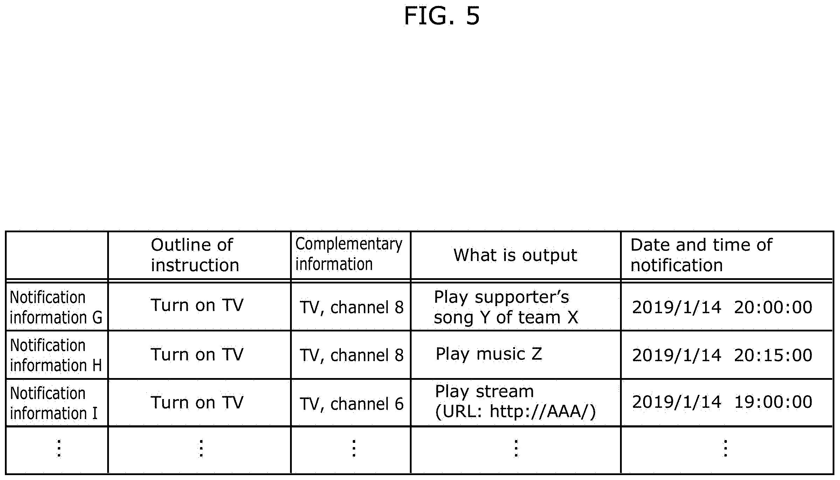

   FIG. 5 shows further other example items of notification information stored in the storage in the information processing system according to Embodiment 1.
[FIG. 6]

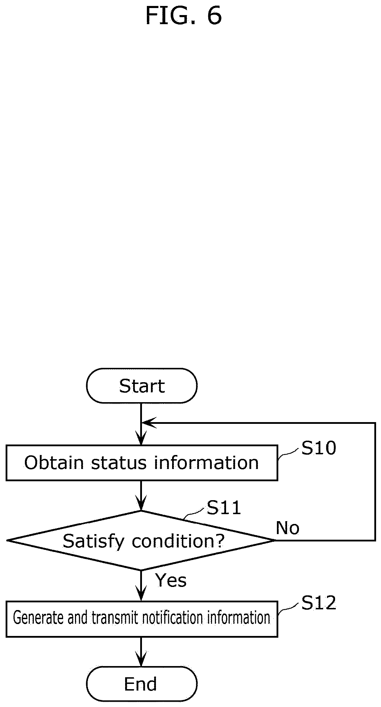

   FIG. 6 is a flowchart showing an operation of a server device that generates notification information in the information processing system according to Embodiment 1.
[FIG. 7]

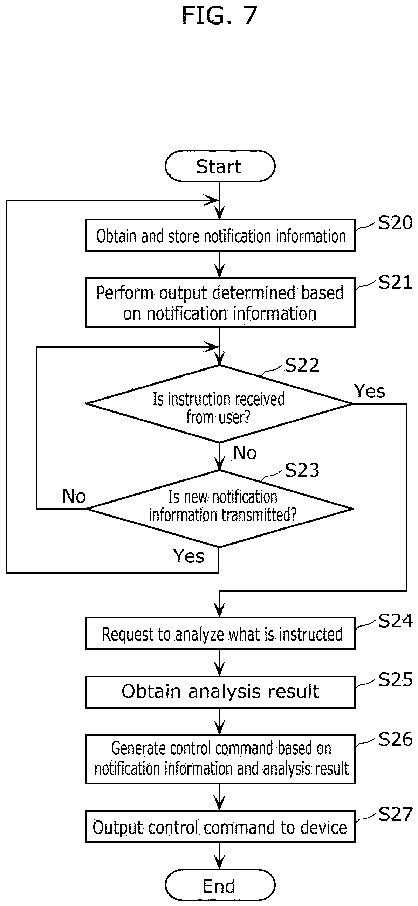

   FIG. 7 is a flowchart showing an operation of an information processing device in the information processing system according to Embodiment 1.
[FIG. 8]

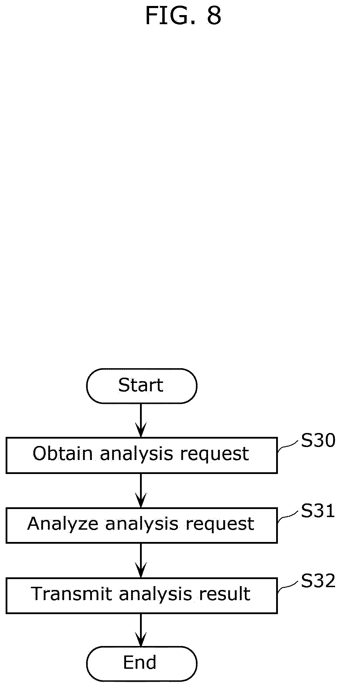

   FIG. 8 is a flowchart showing an operation of a server device that analyzes what is instructed in the information processing system according to Embodiment 1.
[FIG. 9]

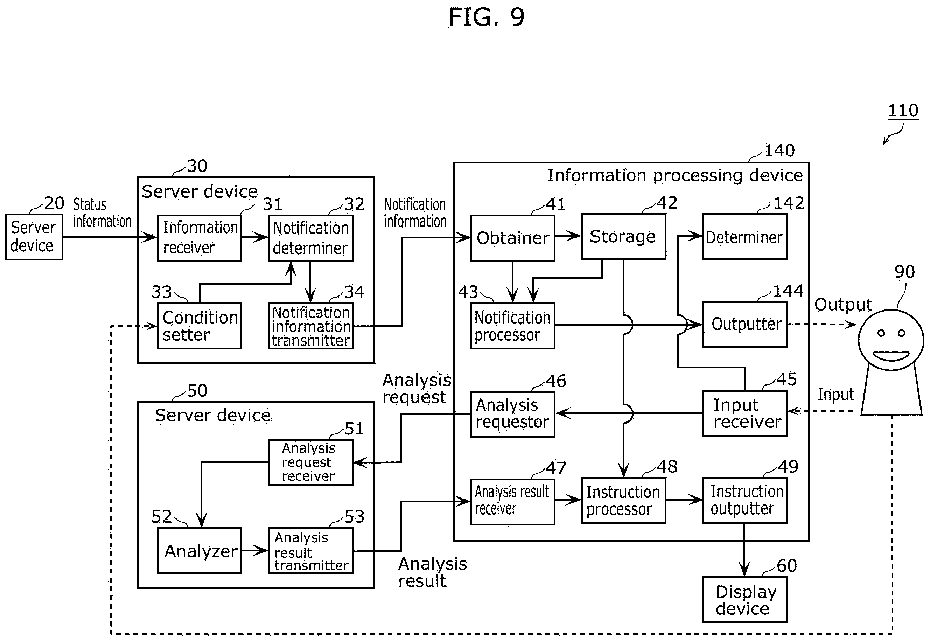

   FIG. 9 is a block diagram showing a functional configuration of an information processing system according to Embodiment 2.
[FIG. 10]

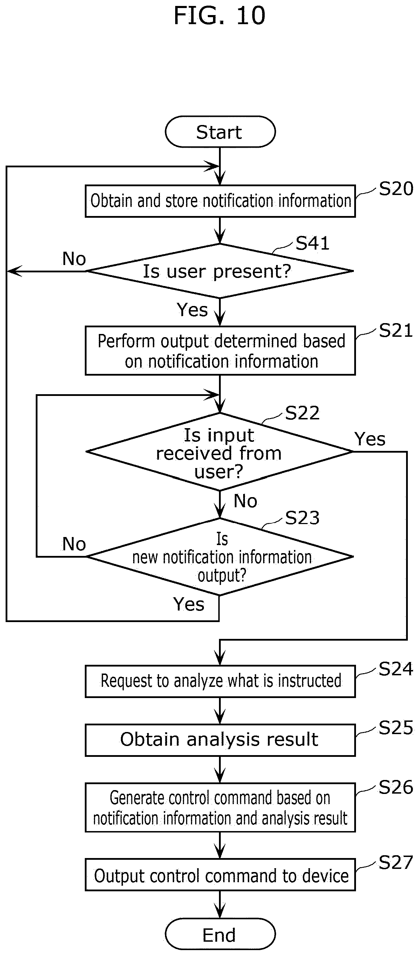

   FIG. 10 is a flowchart showing an operation of an information processing device in the information processing system according to Embodiment 2.
[FIG. 11]

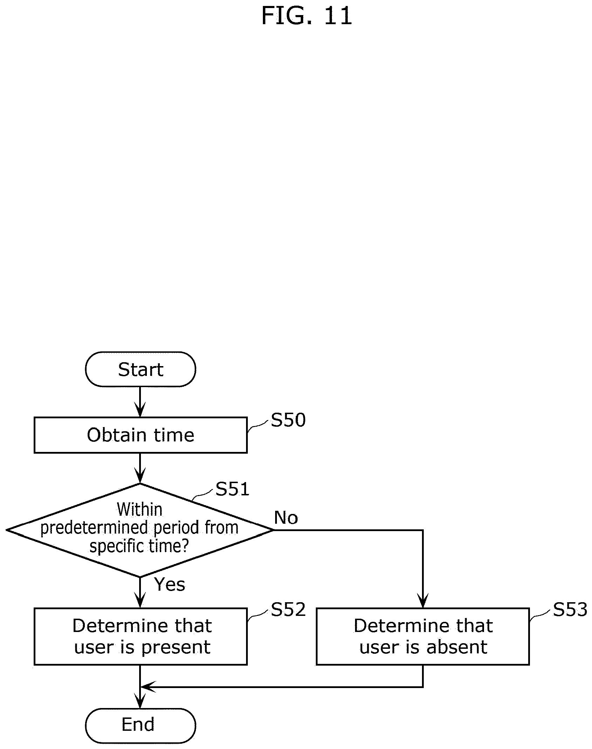

   FIG. 11 is a flowchart showing example processing of determining whether a user is preset, by the information processing device according to Embodiment 2.
[FIG. 12]

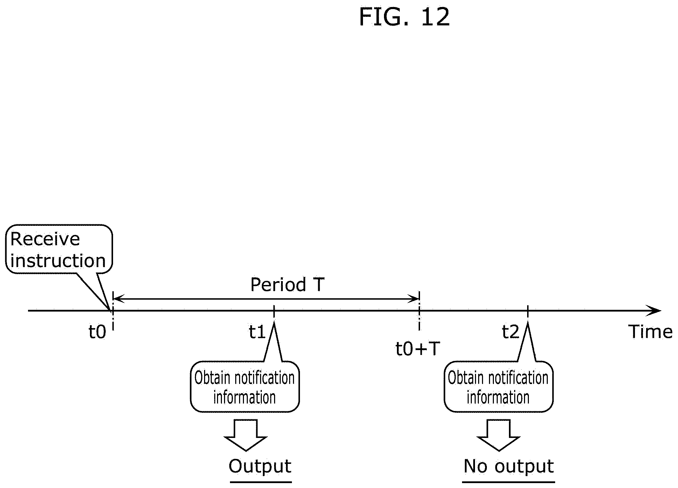

   FIG. 12 is for illustrating output of notification information based on the determination on whether the user is present, by the information processing device according to Embodiment 2.
[FIG. 13]

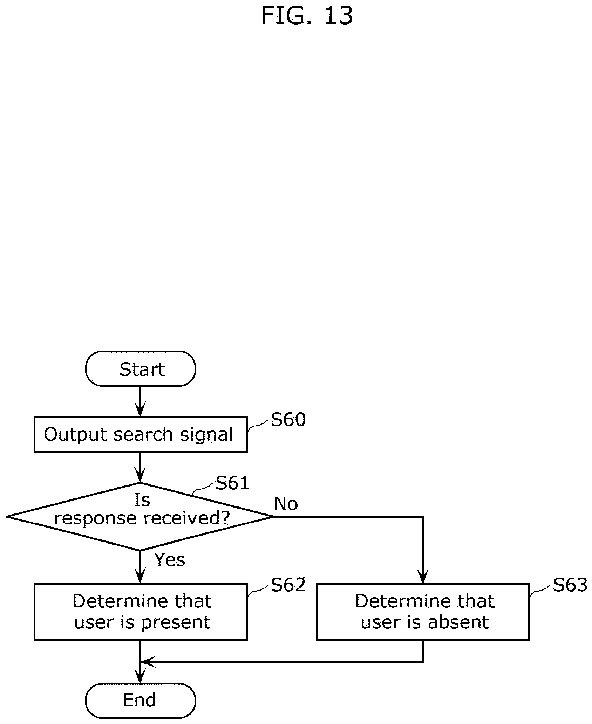

   FIG. 13 is a flowchart showing another example processing of determining whether the user is present, by the information processing device according to Embodiment 2.
[FIG. 14]

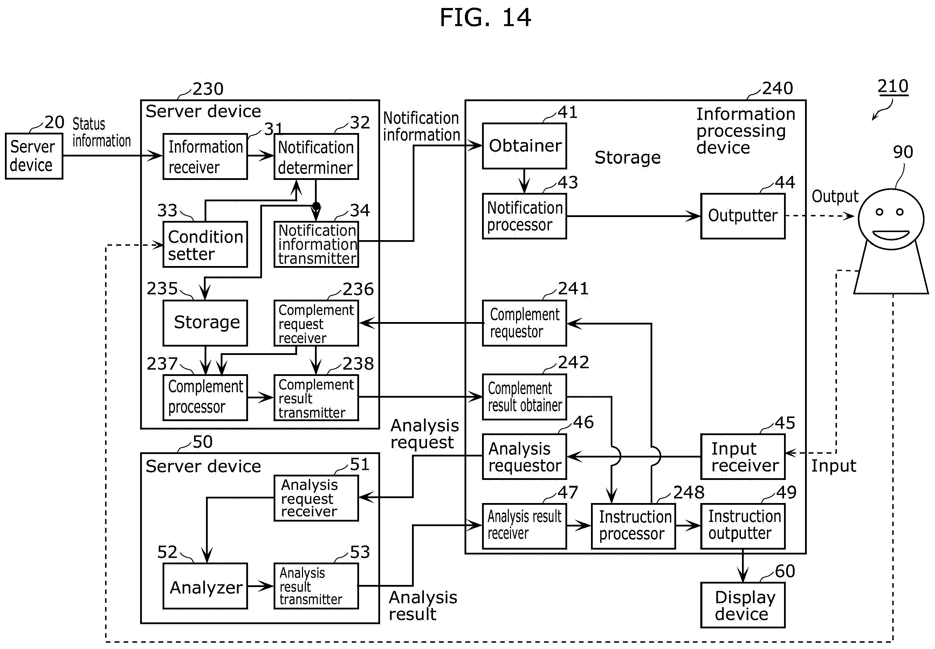

   FIG. 14 is a block diagram showing a functional configuration of an information processing system according to Embodiment 3.
[FIG. 15]

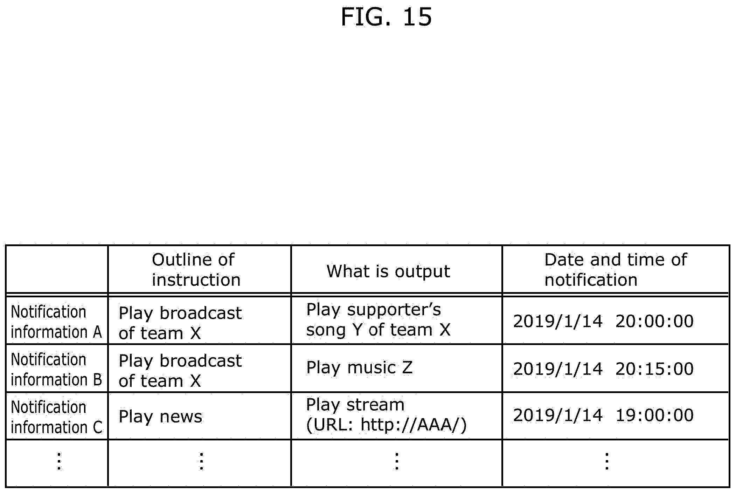

   FIG. 15 shows example items of notification information transmitted from a server device to an information processing device in the information processing system according to Embodiment 3.
[FIG. 16]

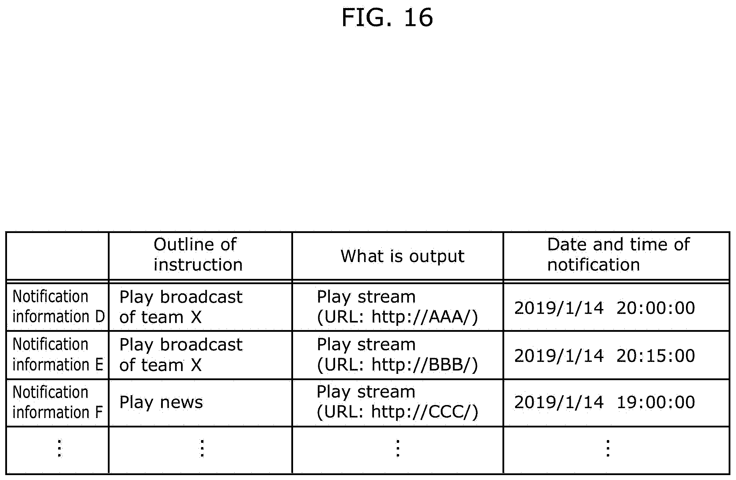

   FIG. 16 shows other example items of notification information transmitted from the server device to the information processing device in the information processing system according to Embodiment 3.
[FIG. 17]

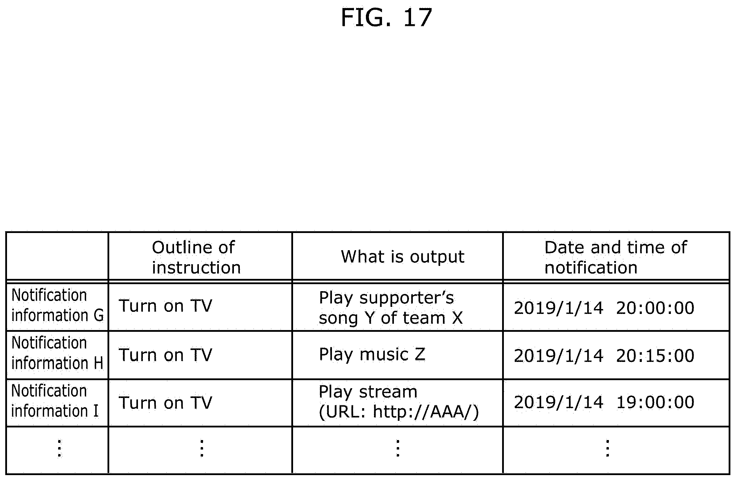

   FIG. 17 shows other example items of notification information transmitted from the server device to the information processing device in the information processing system according to Embodiment 3.
[FIG. 18]

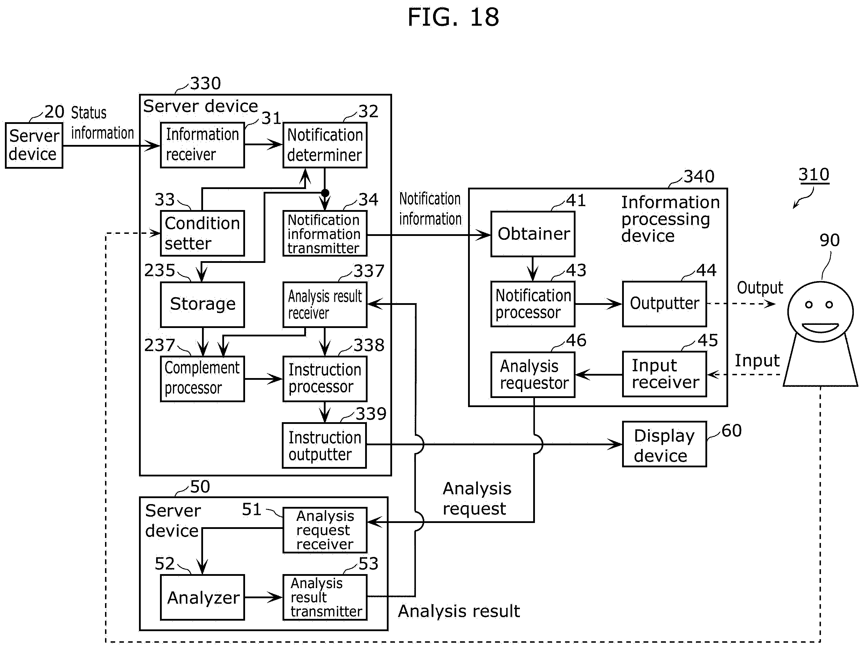

   FIG. 18 is a block diagram showing a functional configuration of an information processing system according to Embodiment 4.
[FIG. 19]

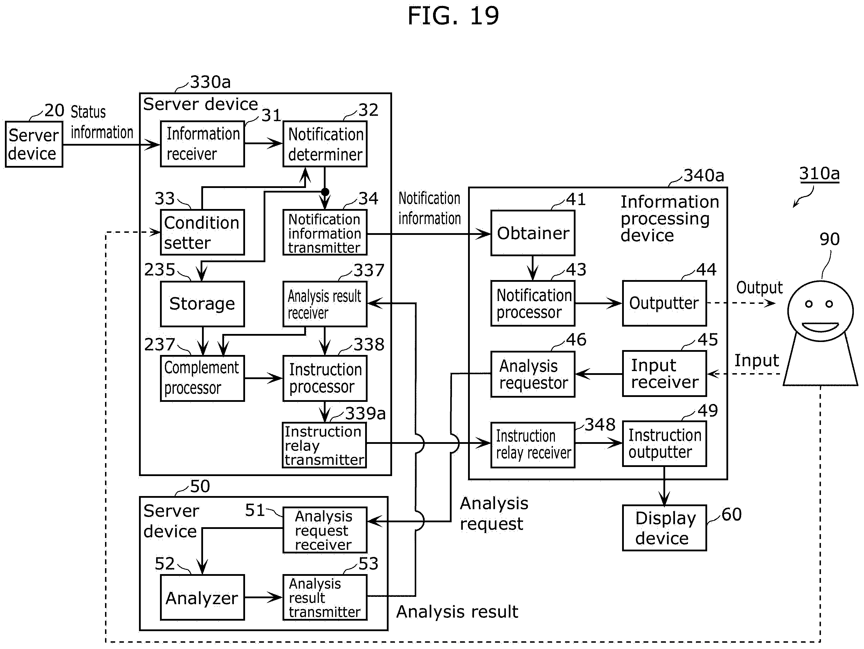

   FIG. 19 is a block diagram showing a functional configuration of an information processing system according to a variation of Embodiment 4.
[FIG. 20]

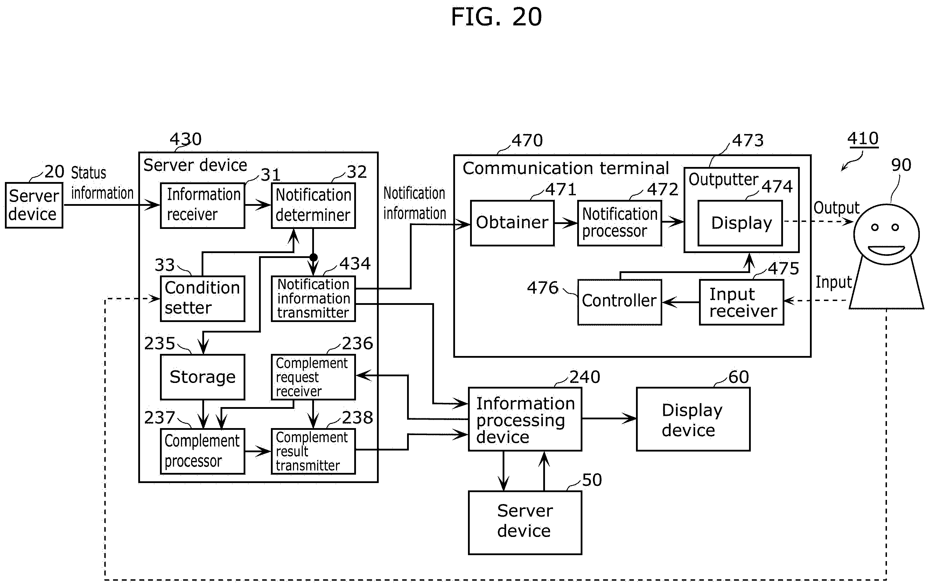

   FIG. 20 is a block diagram showing a functional configuration of an information processing system according to Embodiment 5.
[FIG. 21]

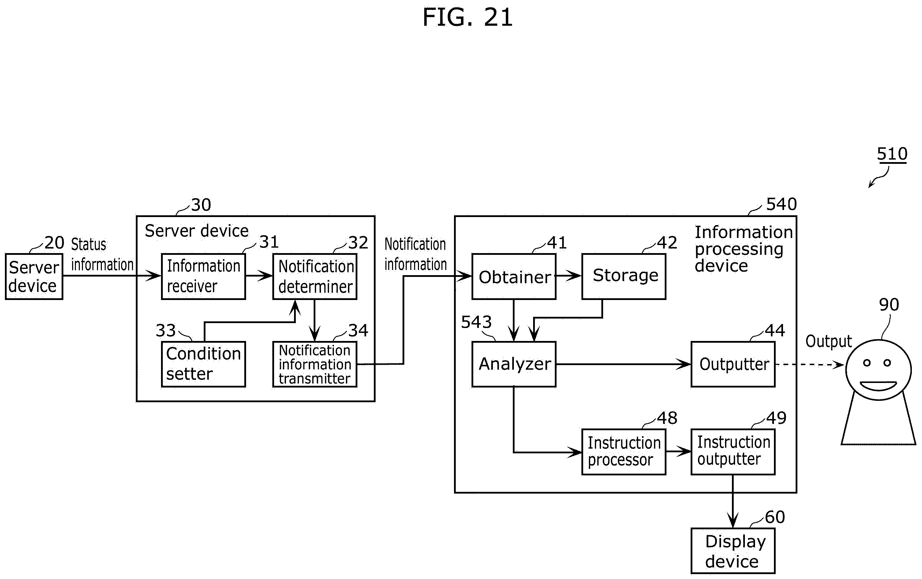

   FIG. 21 is a block diagram showing a functional configuration of an information processing system according to Embodiment 6.
[FIG. 22]

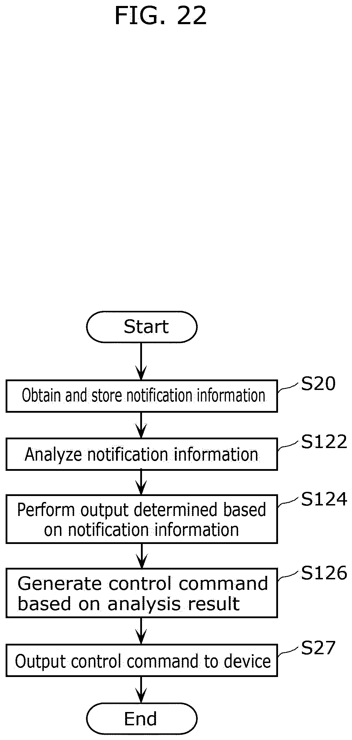

   FIG. 22 is a flowchart showing an operation of an information processing device in the information processing system according to Embodiment 6.

### [Description of Embodiments]

Now, embodiments will be described in detail with reference to the drawing as appropriate. However, unnecessarily detailed description may be omitted. For example, detailed description of already well-known matters and duplicated description of substantially the same configurations may be omitted. This is for avoiding unnecessarily redundant description and easier understanding of those skilled in the art.

Note that the present inventors provide the appended figures and the following description so that those skilled in the art understand the present disclosure sufficiently. The figures and description are not intended to limit the subject matter recited in the claims. That is, each of the following embodiments merely shows a specific example of the present disclosure. The numerical values, shapes, materials, constituent elements, the arrangement and connection of the constituent elements, steps, step orders etc. shown in the following embodiments are thus mere examples, and are not intended to limit the techniques of the present disclosure. Among the constituent elements in the following embodiments, those not recited in any of the independent claims are described as optional constituent elements.

The figures are schematic representations and not necessarily drawn strictly to scale. The scales are thus not necessarily the same in the figures. In the figures, substantially the same constituent elements are assigned with the same reference signs, and redundant descriptions will be omitted or simplified.

### [Embodiment 1]

### [1-1. Outline of Information Processing System]

First, an outline of an information processing system according to this embodiment will be described with reference to FIG. 1. FIG. 1 shows a configuration of information processing system 10 according to this embodiment.

Information processing system 10 shown in FIG. 1 causes information processing device 40 to output the information desired by user 90, and receives instructions from user 90 to devices to generate control commands to the devices based on the received instructions. In this embodiment, display device 60 shown in FIG. 1 is an example of the devices.

For example, in information processing system 10, information processing device 40 outputs sound notifying user 90 of a chance of scoring during the broadcast of a match of favorite team X. User 90 hears the sound output from information processing device 40 and knows the chance. Once user 90 says, "Tune in team X", information processing device 40 receives what the user has said as an input instruction. Information processing device 40 generates a control command to display device 60 based on what the user has said, for example, and outputs the generated control command to display device 60. Display device 60 receives and displays the broadcast of the match of team X based on the control command.

In this manner, in this embodiment, the notification is made based on the match status of team X so that user 90 does not miss the chance. When user 90 wants to watch the match, there is no need to instruct the channel for receiving the broadcast. With a simple instruction, display device 60 displays the match of team X. As described above, information processing system 10 according to this embodiment controls devices highly conveniently for users.

Specifically, as shown in FIG. 1, information processing system 10 includes, server device 20, server device 30, information processing device 40, and server device 50. Information processing system 10 controls display device 60 that is an example of the devices.

Server device 20 stores items of information and delivers the stored information. For example, server device 20 stores sport match progresses or news to deliver them as special reports or breaking news. Alternatively, server device 20 may deliver, in real time, the progresses of TV programs being broadcasted.

The information delivered by server device 20 includes the information that attracts user 90 and the information that may attract user 90. Server device 20 transmits some items of the stored information to server device 30.

Server device 30 outputs notification information to information processing device 40. Specifically, server device 30 determines whether predetermined conditions are satisfied, based on the information delivered from server device 20. Server device 30 outputs the notification information when the predetermined conditions are determined to be satisfied. The predetermined conditions are, for example, determined in advance by user 90.

Information processing device 40 performs the output determined based on the notification information output from server device 30. In addition, information processing device 40 receives, as inputs, instructions from user 90 to devices. Information processing device 40 generates control commands to the devices based on the received instructions and the notification information. Specifically, information processing device 40 transmits the received instructions to server device 50, and receives, as responses, the analysis results transmitted from server device 50. Information processing device 40 generates the control commands based on the analysis results and the notification information. In this embodiment, information processing device 40 generates control commands to display device 60, and transmits the generated control commands to display device 60. Information processing device 40 is, for example, a smart speaker with an artificial intelligence (AI) assistant function for interactive voice operation.

Server device 50 has the AI assistant function of information processing device 40. Specifically, server device 50 receives what has been input to information processing device 40, analyzes what has been received, and transmits the analysis results to information processing device 40.

Display device 60 is an example of the devices to be controlled by information processing system 10. For example, display device 60 is a television with a liquid crystal display panel or an electroluminescence (EL) display panel. Display device 60 receives wired or wireless broadcast and displays programs being broadcasted. Note that display device 60 may receive and display streaming broadcast transmitted via the Internet.

Server device 20, server device 30, information processing device 40, and server device 50 are connected communicatively via the Internet. Information processing device 40 and display device 60 are connected communicatively by a wireless local area network (LAN) such as Wi-Fi (registered trademark), Bluetooth (registered trademark), or ZigBee (registered trademark), or a wired network. Note that display device 60 may be connected to the Internet or connected communicatively to server device 30. Additionally or alternatively, server device 30 and server device 50 may be connected communicatively.

The configuration of information processing system 10 is not limited to the example shown in FIG. 1. For example, at least two of server device 20, server device 30, and server device 50 may be integrated into a single server device. For example, a single server device may have the functions of server device 20, server device 30, and server device 50. Alternatively, information processing device 40 may have at least some of the functions of at least one of server device 20, server device 30, and server device 50. For example, information processing device 40 may have all the functions of server device 20, server device 30, and server device 50.

### [1-2. Configuration of Devices Constituting Information Processing System]

Now, specific functional configurations of server device 30, information processing device 40, and server device 50 will be described.

FIG. 2 is a block diagram showing a functional configuration of information processing system 10 according to this embodiment.

### [1-2-1. Configuration of Server Device 30]

As shown in FIG. 2, server device 30 includes information receiver 31, notification determiner 32, condition setter 33, and notification information transmitter 34.

Each of information receiver 31 and notification information transmitter 34 is configured as, for example, one or more communication interfaces for wired or wireless communications. Each of notification determiner 32 and condition setter 33 includes, for example, a non-volatile memory storing programs, a volatile memory that is a temporary storage area for executing the programs, an input/output port, or a processor that executes the programs.

Information receiver 31 receives status information from server device 20. The status information indicates the real-time status such as special reports on sports matches, breaking news, or the content of TV programs.

The special reports on sports matches include, for example, ball-by-ball reports on baseball matches; special reports on match progresses of sports such as soccer, volleyball, tennis, and table tennis; and starting orders in track and field, judo, ski, skate, and figure skating. The breaking news include news on disasters such as typhoons and earthquakes, incidents, accidents; and news on economy and entertainment. The content of TV programs includes, for example, real-time content being broadcasted including casts or handled themes.

Notification determiner 32 determines whether to transmit notification information to information processing device 40. Specifically, notification determiner 32 determines whether to transmit notification information based on the status information received by information receiver 31 and the conditions set by condition setter 33. For example, if the status indicated by the status information satisfies the preset conditions, notification determiner 32 determines to transmit notification information. If the status indicated by the status information fails to satisfy the preset conditions, notification determiner 32 determines not to transmit any notification information.

Determining to transmit notification information, notification determiner 32 generates and outputs the notification information. Specific examples of the notification information will be described later with reference to FIGS. 3 to 5. Determining not to transmit any notification information, notification determiner 32 generates no notification information.

Condition setter 33 sets a condition for transmitting notification information. Condition setter 33 may set a plurality of conditions. The condition(s) is/are determined in advance by user 90. For example, user 90 inputs, via information processing device 40, what is desired to be notified of. What is desired to be notified of may be, for example, favorite or interesting sports, teams, people such as players or entertainers, and news, and is not particularly limited. Condition setter 33 sets conditions for notifying of what is desired by user 90, based on inputs from user 90.

For example, if user 90 wishes a notification of a match of team X, condition setter 33 sets, as a condition, inclusion of the information about team X in the status information. At this time, condition setter 33 may set, as conditions, specific content such as a chance of scoring team X, the climax of a match (e.g., the seventh inning of a baseball match), and a coming win. Accordingly, at a chance of scoring by team X, for example, notification determiner 32 determines to transmit notification information.

Alternatively, condition setter 33 may set, as a condition, a coming turn of a player whose match or play user 90 wants to see based on an input from user 90. Condition setter 33 may set, as a condition, a specific news genre such as earthquake. Condition setter 33 may set, as a condition, the appearance of a favorite entertainer of user 90 on a program. The specific conditions are not particularly limited.

Note that condition setter 33 may estimate the information which user 90 wishes to be notified of based on the data on user 90 and set conditions based on the estimated information. The data on user 90 includes the demographic data such as the age, the gender, the area of residence, and the occupation as well as the preferences, the lifestyle, and the TV viewing history. Condition setter 33 may automatically update the conditions through machine learning.

If notification determiner 32 determines to transmit notification information, notification information transmitter 34 transmits the notification information to information processing device 40.

### [1-2-2. Configuration of Information Processing Device 40]

As shown in FIG. 2, information processing device 40 includes obtainer 41, storage 42, notification processor 43, outputter 44, input receiver 45, analysis requestor 46, analysis result receiver 47, instruction processor 48, and instruction outputter 49.

Each of obtainer 41, analysis requestor 46, analysis result receiver 47, and instruction outputter 49 is configured as, for example, one or more communication interfaces for wired or wireless communications. Storage 42 is a storage device such as a memory. Each of notification processor 43 and instruction processor 48 includes, for example, a non-volatile memory storing programs, a volatile memory that is a temporary storage area for executing the programs, an input/output port, or a processor that executes the programs. Outputter 44 is a speaker or a display, for example. Input receiver 45 is a microphone, a touch sensor, or physical buttons, for example.

Obtainer 41 obtains the notification information notified of when predetermined conditions are satisfied. Specifically, obtainer 41 receives and obtains the notification information transmitted from server device 30. Specifically, obtainer 41 obtains items of notification information. For example, every time when notification information is transmitted from server device 30, obtainer 41 obtains the transmitted notification information.

Storage 42 stores the items of notification information obtained by obtainer 41. Specifically, storage 42 stores, in a memory, the items of notification information in association with the date and time of notification. The date and time of notification are, for example, the date and time of transmitting or receiving notification information. The transmitted notification information may include the date and time of notification. Note that storage 42 may store, in the memory, only the most recent notification information out of the items of notification information obtained by obtainer 41. In this case, the notification information may not be associated with the date and time of notification. The date and time of notification include the date and the time. Alternatively, the date and time of notification may include no date but only the time.

Notification processor 43 processes the notification information obtained by obtainer 41. Specifically, notification processor 43 determines the content to be output by outputter 44 based on the notification information. For example, notification processor 43 determines, as the content to be output by outputter 44, the content to be output as included in the most recent notification information out of the items of notification information stored in storage 42.

Outputter 44 performs the output determined based on the notification information. Specifically, outputter 44 performs the outputs as determined by notification processor 43. For example, outputter 44 performs the output determined based on the most recent notification information out of the items of notification information stored in storage 42.

Input receiver 45 receives instructions from user 90 to devices. The instructions are made, for example, by input voice, operation on an input screen, or operation of a physical button. In the example shown in FIG. 1, input receiver 45 receives, an instruction to a device, the utterance "tune in team X" of user 90.

Analysis requestor 46 requests server device 50 to analyze what is instructed as received by input receiver 45. For example, analysis requestor 46 outputs the uttered voice data of user 90 to server device 50. Alternatively, analysis requestor 46 requests, from server device 50, what has been input to the input screen or the information indicating the operated button.

Analysis result receiver 47 receives the results of the analysis by server device 50.

Instruction processor 48 generates control commands to the devices. Specifically, assume that input receiver 45 receives an instruction after the output is performed by outputter 44. In this case, instruction processor 48 generates a control command based on the instruction received by input receiver 45 and the notification information about the output by outputter 44. More specifically, instruction processor 48 generates a control command based on the result of analyzing the instruction received by input receiver 45 and complementary information included in the notification information about the output by outputter 44.

Instruction outputter 49 outputs the control commands generated by instruction processor 48 to devices. Specifically, instruction outputter 49 outputs the control commands to display device 60. If information processing device 40 and display device 60 are not connected by Wi-Fi, for example, instruction outputter 49 outputs the control commands utilizing infrared communications. If information processing device 40 and display device 60 are connected by Wi-Fi, instruction outputter 49 outputs the control commands utilizing communications by Wi-Fi, for example. Note that, if information processing device 40 and display device 60 are connected by Bluetooth (registered trademark), instruction outputter 49 outputs the control commands utilizing communications by Bluetooth (registered trademark), for example. The communication method is not particularly limited.

### [1-2-3. Configuration of Server Device 50]

Server device 50 includes analysis request receiver 51, analyzer 52, and analysis result transmitter 53.

Each of analysis request receiver 51 and analysis result transmitter 53 is configured as, for example, one or more communication interfaces for wired or wireless communications. Analyzer 52 includes, for example, a non-volatile memory storing programs, a volatile memory that is a temporary storage area for executing the programs, an input/output port, or a processor that executes the programs.

Analysis request receiver 51 receives analysis requests from analysis requestor 46 of information processing device 40. Specifically, analysis request receiver 51 obtains, as the analysis requests, the uttered voice data of user 90, what has been input to the input screen, or the information indicating an operated button, for example.

Analyzer 52 analyzes an analysis request received by analysis request receiver 51. For example, analyzer 52 determines how to control a device as intended by user 90 based on the utterance of user 90, what has been input to the input screen, or the information indicating the operated button. Analyzer 52 determines how to control the device as intended by user 90 at a high accuracy through machine learning such as deep learning.

For example, if an analysis request is made by the utterance "tune in team X", analyzer 52 generates, as an analysis result, a character string of: command = "tune in team X". Alternatively, analyzer 52 may generate, as an analysis result, a command number such as "100" instead of the character string. For example, information processing device 40 may store, in a storage (not shown), association information between command numbers and commands.

Analysis result transmitter 53 transmits, as an analysis result, the details of the control determined by analyzer 52 to information processing device 40.

### [1-3. Notification Information]

Now, a specific example of the notification information transmitted from server device 30 to information processing device 40 will be described.

FIG. 3 shows example items of notification information stored in storage 42 in information processing system 10 according to this embodiment. FIG. 3 shows, as examples, three notification information items a to c and the dates and times of notifications.

As shown in FIG. 3, the notification information includes the information about the content to be output by outputter 44, the outlines of the instructions received by input receiver 45, and complementary information that complements the instructions. The outlines of the instructions include what is assumed to be instructed from user 90, when what is associated is output, for example. The outlines of the instructions include the character strings or commands included in the results of the analysis by server device 50. Being complemented by the complementary information, even a simple instruction received from user 90 can be used for generating a control command for causing a device to execute a desired operation.

In the example shown in FIG. 3, supporter's song Y indicated by notification information A and music Z indicated by notification information B are stored in a storage (not shown) of information processing device 40, for example. In addition, the information about the content to be output as indicated by notification information C includes the storage information indicating the location where at least one of sound, an image, or a video is stored. Storage information is a uniform resource locator (URL), for example. Outputter 44 of information processing device 40 accesses the website indicated by the URL, and reproduces, through streaming, at least one of sound, an image, and a video reproducible on the accessed website. Note that the storage information may be memory addresses of memories included in information processing device 40 or management domain names contained in a table for managing the information.

As shown in FIG. 4, the information about the content to be output as indicated by all the notification information may include storage information. There is thus no need for information processing device 40 to store supporter's song Y or music Z, for example, which allows efficient utilization of memory resources of information processing device 40 for other functions. In addition, various sound and videos on the Internet can be output, which largely improves the flexibilities of the content to be output.

As shown in FIG. 5, the outlines of the instructions may include a smaller amount of information. For example, an instruction of "play the broadcast of team X" according to notification information A shown in FIG. 3 includes three types of information, namely, "team X" as the information about the content, "broadcast" as the information about the device to be controlled, and "play" as the information about how to control the device.

On the other hand, the instruction "turn on the TV" according to notification information G to I shown in FIG. 5 includes only two types of information, namely, "TV" as the information about the device and "turn on" as the information about how to control the device. For example, when user 90 says "turn on the TV", display device 60 is turned on and displays the broadcast of channel 8 based on the most recent notification information H. In this manner, user 90 needs to input a smaller amount of information, which further improves the convenience for users.

### [1-4. Operation]

Subsequently, an operation of information processing system 10 according to this embodiment will be described with reference to FIGS. 6 to 8.

### [1-4-1. Operation of Server Device 30]

First, an operation of server device 30 that generates notification information will be described with reference to FIG. 6. FIG. 6 is a flowchart showing the operation of server device 30 in information processing system 10 according to this embodiment.

As shown in FIG. 6, in server device 30, information receiver 31 obtains status information (S10). Next, notification determiner 32 determines whether the obtained status information satisfies a condition (S11). Note that, if condition setter 33 sets a plurality of conditions, whether the status information satisfies at least one of the plurality of conditions is determined.

If the status information is determined to satisfy at least one of the conditions (Yes in S11), notification determiner 32 generates the notification information according to the satisfied condition, and notification information transmitter 34 transmits the generated notification information (S12). If the status information is determined to satisfy none of the plurality of conditions (No in S11), the process returns to step S10 without generating any notification information, and notification determiner 32 waits for obtainment of the next status information.

Through the operation described above, every time when the status information satisfies a condition, server device 30 generates and transmits the notification information according to the satisfied condition. Accordingly, server device 30 transmits items of notification information to information processing device 40 at different times.

### [1-4-2. Operation of Information Processing Device 40]

Next, an operation of information processing device 40 will be described with reference to FIG. 7. FIG. 7 is a flowchart showing the operation of information processing device 40 in information processing system 10 according to this embodiment.

As shown in FIG. 7, in information processing device 40, obtainer 41 obtains the notification information transmitted from server device 30, and storage 42 stores the obtained notification information (S20). Next, notification processor 43 determines the content to be output based on the notification information, and outputter 44 performs the determined output (S21). For example, if obtainer 41 obtains notification information A shown in FIG. 3, outputter 44 reads out supporter's song Y of team X from a storage (not shown) and outputs the song.

Next, input receiver 45 waits for receipt of an instruction from user 90 (No in S22 and No in S23). During the wait, if new notification information is transmitted from server device 30 (Yes in S23), the process returns to step S20 and obtainer 41 obtains new notification information. Then, outputter 44 performs the output determined based on the new notification information. In this manner, information processing device 40 performs the output determined based on the obtained notification information, every time when notification information is obtained until an instruction is received from user 90.

Hearing output supporter's song Y, user 90 says, "Tune in team X", for example. Accordingly, input receiver 45 receives the instruction "tune in team X" from user 90 (Yes in S22). In this case, analysis requestor 46 requests to analyze what is instructed (S24). For example, analysis requestor 46 transmits the sound data "tune in team X" to server device 50.

Next, analysis result receiver 47 obtains the analysis result transmitted from server device 50 (S25). For example, since analysis requestor 46 requests to analyze the sound data "tune in team X", analysis result receiver 47 receives, as the analysis result, the details of the control of "turning on display device 60" from server device 50.

Next, instruction processor 48 generates a control command to a device based on the notification information obtained in step S20 and the analysis result (S26). For example, since the complementary information included in notification information A shown in FIG. 3 indicates "channel 8", instruction processor 48 generates the control command to "turn on display device 60 and tune in reception channel 8" based on the analysis result.

Next, instruction outputter 49 outputs the control command to the device (S27). Specifically, instruction outputter 49 outputs the control command to display device 60. Display device 60 is turned on and displays a match video of team X broadcasted on channel 8 based on the control command to "turn on display device 60 and tune in reception channel 8".

Note that, even if no notification information is obtained, display device 60 can be turned on in response to the instruction "tune in team X" by user 90. However, since user 90 fails to designate the channel broadcasting the match of "team X", display device 60 cannot display the match video of "team X". Similarly, the instruction "turn on the TV" by user 90 lacks the channel information and display device 60 cannot thus display the match video of "team X ".

By contrast, information processing device 40 according to this embodiment allows the control of a device desired by user 90 even if a simple instruction is received from user 90 after the output determined based on the notification information. That is, even if the information included in the instruction from user 90 is too small to execute the control as desired by user 90, the notification information complements the lacking information. Accordingly, information processing device 40 operates the device as desired by user 90.

### [1-4-3. Operation of Server Device 50]

Next, an operation of server device 50 that analyzes what is instructed will be described with reference to FIG. 8. FIG. 8 is a flowchart showing the operation of server device 50 in information processing system 10 according to this embodiment.

As shown in FIG. 8, in server device 50, analysis request receiver 51 obtains the analysis request transmitted from information processing device 40 (S30). For example, analysis request receiver 51 receives the sound data including the utterance "tune in team X" of user 90.

Next, analyzer 52 analyzes the analysis request received by analysis request receiver 51 (S31). Specifically, analyzer 52 analyzes what is instructed by user 90 included in the analysis request to determine how to control a device as intended by user 90. For example, with respect to the instruction "tune in team X", analyzer 52 determines, as the control, to "turn on display device 60".

Next, analysis result transmitter 53 transmits, as the analysis result, how to control the device as determined by analyzer 52 (S32).

### [1-5. Advantages]

As described above, information processing system 10 according to this embodiment includes server device 30 that outputs notification information when a predetermined condition is satisfied, and information processing device 40 that communicates with server device 30. Information processing device 40 includes obtainer 41 that obtains the notification information output from server device 30, outputter 44 that performs the output determined based on the notification information obtained by obtainer 41, and input receiver 45 that receives an instruction from user 90 to a device. Information processing device 40 includes instruction processor 48 that generates a control command to the device, and instruction outputter 49 that outputs the control command to the device. Instruction processor 48 generates the control command based on the instruction and the notification information, when input receiver 45 receives the instruction after the output is performed.

With this configuration, even if there is no instruction from user 90, the output determined based on the notification information is performed to promote user 90 to control the device. Even if the instruction from user 90 is simple, the control command can be generated properly using the notification information. In addition, information processing device 40 generates and outputs the control command, which allows control of the device highly conveniently for the user.

In short, user 90 is automatically notified of necessary information, the device operates in accordance with a demand by user 90 with a simple instruction based on the notification. In this manner, information processing system 10 according to this embodiment assists control of devices highly conveniently for users.

For example, the notification information includes at least one of information about the content to be output by outputter 44, the outline of the instruction received by input receiver 45, and complementary information that complements the instruction. Instruction processor 48 generates a control command based on the instruction and the complementary information.

This configuration allows proper generation of a control command for operating a device in accordance with a demand by user 90 using the complementary information.

For example, the information about the content to be output includes the storage information indicating the location where at least one of sound, an image, or a video is stored. Outputter 44 obtains and outputs the at least one of the sound, the image, and the video stored in the location indicated by the storage information.

This configuration allows the notification information to include, for example, a URL as the storage information. Simply by accessing the URL, information processing device 40 performs the output determined based on the notification information. That is, there is no need for information processing device 40 to store music data or video data used for the output, which allows efficient utilization of memory resources of information processing device 40. For example, information processing device 40 needs to have lower memory capacity, which reduces the size and power consumption of information processing device 40.

For example, obtainer 41 obtains items of notification information. Information processing system 10 further includes storage 42 that stores the items of notification information obtained by obtainer 41. Outputter 44 performs the output determined based on the most recent notification information out of the items of notification information stored in storage 42.

With this configuration, the notification information is stored. For example, if user 90 is absent near, the outputter waits for user 90 coming near and then perform the output. Accordingly, effective notification is made to user 90.

For example, information processing device 40 according to this embodiment includes obtainer 41 that obtains the notification information output when a predetermined condition is satisfied, outputter 44 that performs the output determined based on the notification information, input receiver 45 that receives an instruction from a user to a device, and instruction processor 48 that generates a control command to the device. Instruction processor 48 generates the control command based on the instruction and the notification information when input receiver 45 receives the instruction after the output is performed.

With this configuration, even if there is no instruction from user 90, the output determined based on the notification information is performed to promote user 90 to control the device. Even if the instruction from user 90 is simple, the control command can be generated properly using the notification information. In this manner, information processing device 40 according to this embodiment assists control of devices highly conveniently for users.

For example, the information processing method according to this embodiment includes obtaining notification information output when a predetermined condition is satisfied, performing the output determined based on the notification information, receiving an instruction from user 90 to a device, and generating the control command to the device. In the generating, the control command is generated based on the instruction and the notification information when the instruction is received after the output is performed.

This method assists control of devices highly conveniently for users, like information processing device 40 described above.

### (Embodiment 2)

Subsequently, Embodiment 2 will be described.

An information processing device according to Embodiment 2 functions to determine whether user 90 is present around. If user 90 is determined to be present, the information processing device performs the output determined based on the notification information. Differences from Embodiment 1 will be mainly described below, and the description of the common points will be omitted or simplified.

### [2-1. Configuration]

FIG. 9 is a block diagram showing a functional configuration of information processing system 110 according to this embodiment. As shown in FIG. 9, information processing system 110 according to this embodiment differs from information processing system 10 shown in FIG. 2 as follows. In place of information processing device 40, information processing device 140 is included. Unlike information processing device 40, information processing device 140 newly includes determiner 142 and includes outputter 144 in place of outputter 44.

Determiner 142 includes, for example, a non-volatile memory storing programs, a volatile memory that is a temporary storage area for executing the programs, an input/output port, or a processor that executes the programs.

Determiner 142 determines whether user 90 is present around outputter 144. Specifically, determiner 142 determines that user 90 is present around outputter 144, if determination is made within a predetermined period from a specific time. If the determination is made after the predetermined period from the specific time, determiner 142 determines that user 90 is absent from outputter 144. The determination is made at the current time measured by, for example, a timer (not shown) included in information processing device 140. The predetermined period is, for example, one minute or three minutes but not limited thereto. The predetermined period may be, for example, the time required by user 90 to move the location of outputter 144 to a position in which no output reaches from outputter 144.

The specific time is when a predetermined action of user 90 is detected. For example, the specific time is when input receiver 45 receives an instruction from user 90. Alternatively, the specific time may be when input receiver 45 collects the voice of talking user 90. That is, the specific time may be when input receiver 45 collects the utterance of user 90 other than an instruction, for example, conversation with others.

In addition to the operation of outputter 44, outputter 144 performs output if determiner 142 determines that user 90 is present around. If determiner 142 determines that user 90 is absent around, outputter 144 performs no output.

### [2-2. Operation]

Subsequently, an operation of information processing system 110 according to this embodiment will be described with reference to FIGS. 10 to 13. Note that the operations of server device 30 and server device 50 are the same as in Embodiment 1, and the description thereof will thus be omitted.

FIG. 10 is a flowchart showing an operation of information processing device 140 in information processing system 110 according to this embodiment. As shown in FIG. 10, after notification information has been obtained and stored (S20), determiner 142 determines whether user 90 is present around outputter 144 (S41). If user 90 is determined to be absent around (No in S41), the process returns to step S20 and waits for output of new notification information. If user 90 is determined to be present around (Yes in S41), outputter 144 performs the output determined based on the notification information (S21). The subsequent processing is the same as in Embodiment 1.

FIG. 11 is a flowchart showing example determination processing on whether user 90 is present, by information processing device 140 according to this embodiment. FIG. 12 is for illustrating an output of notification information based on the result of determination on whether user 90 is present, by information processing device 140 according to this embodiment.

As shown in FIG. 11, determiner 142 obtains the time from the timer (S50). The time is the current time, for example, but may be an elapsed time from a specific time. In the example shown in FIG. 12, time t0 of receiving the previous instruction is the specific time.

Next, determiner 142 determines whether the obtained time is within a predetermined period from a specific time (S51). If the obtained time is within the predetermined period (Yes in S51), determiner 142 determines that user 90 is present (S52). If the obtained time is out of the predetermined period (No in S51), determiner 142 determines that user 90 is absent (S53).

In the example shown in FIG. 12, assume that notification information is obtained and whether user 90 is present is determined at time t1, within period T, when user 90 is determined to be present. User 90 is thus determined to be present, and outputter 144 performs the output.

Assume that notification information is obtained and whether user 90 is present is determined at time t2, after and out of period T, when user 90 is determined to be absent. User 90 is thus determined to be absent, and outputter 144 performs no output. Accordingly, since no output is performed when user 90 is absent, excessive output can be reduced. Not performing unnecessary output, information processing device 40 requires lower power consumption.

While, in the example shown in FIG. 10, whether user 90 is present is determined after the obtainment of the notification information, the time is not limited thereto. For example, the presence or absence may be determined periodically, for example, every one minute. The presence or absence may be determined every time when predetermined period T has elapsed.

### [2-3. Variation]

Here, a variation of this embodiment will be described.

For example, determiner 142 may include a human sensor such as an infrared sensor or an image sensor. The specific time is when the human sensor was able to detect user 90 last. Determiner 142 may determine that user 90 is present, within a predetermined period after the human sensor has detected user 90 last.

In this case, if user 90 has been detected at the time of obtaining the notification information and determining the presence or absence, determiner 142 may determine that user 90 is present. If no user 90 has been detected at the time of determining the presence or absence, determiner 142 may determine that user 90 is absent.

Server device 30 may have information about whether user 90 is present. For example, server device 30 may obtain a result of detection by a human sensor included in an air conditioner (not shown) placed in the same space as information processing device 40, and store the result as the time-series data indicating whether user 90 is present. Notification determiner 32 may transmit the notification information including the information about whether user 90 is present. This allows determiner 142 to determine whether user 90 is present at the time of obtaining the notification information.

Determiner 142 may determine whether a predetermined specific user is present. For example, if the human sensor detects a person who is not the specific user, determiner 142 may determine that user 90 is absent. If the person detected by the human sensor is the specific user, determiner 142 may determine that user 90 is present.

For example, a plurality of users such as a family may use information processing device 140. In this case, condition setter 33 may set the condition for each user. Notification information includes user information associated with the condition satisfied by the status information. Determiner 142 determines whether the user indicated by the user information included in notification information is present around.

Whether the detected person is a specific user is determined through face recognition of an image captured by an image sensor, for example. Alternatively, the specific user may be determined through biometric authentication of the voiceprint of the voice received by input receiver 45.

For example, the user determination may be made utilizing a communication terminal carried by a user. FIG. 13 is a flowchart showing example determination processing on whether user 90 is present, by information processing device 140 according to this variation.

As shown in FIG. 13, determiner 142 outputs a search signal for searching for a communication terminal (S60). If a response signal to the search signal is received (Yes in S61), determiner 142 determines that user 90 is present (S62). If no response signal is received within a predetermined period (No in S61), determiner 142 determines that user 90 is absent (S63). The predetermined period here is, for example, several seconds or one second or less.

At this time, determiner 142 determines whether a specific user is present utilizing identification information peculiar to the communication terminal included in the response signal. The search signal is an inquiry command or a remote name request command of Bluetooth (registered trademark), for example. A response signal to the signal includes the media access control (MAC) address of a communication terminal. Determiner 142 holds the association information indicating the specific user and the MAC address in association. Determiner 142 refers to the association information, thereby determining whether the specific user is present.

Determiner 142 may change the signal intensity for outputting the search signal. For example, determiner 142 may output the search signal at a plurality of levels of signal intensities. The stronger the signal intensity is, the farther distance a search signal reaches. Accordingly, by changing the signal intensity of the search signal, whether the user of a communication terminal is near or far away can be determined.

Determiner 142 may determine whether user 90 is present by monitoring the packets flowing through a LAN connected to information processing device 140. For example, by extracting a MAC address included in a packet and referring to the association information based on the extracted MAC address, whether the user is present may be determined.

A response signal may be received at the specific time described above. Specifically, determiner 142 may determine that user 90 is present, if the determination is made within predetermined period T from the time of receiving a response signal. Determiner 142 may determine that user 90 is absent, if the determination is made out of predetermined period T from the time of receiving a response signal. The same may apply to the time of detecting the MAC address included in the packets flowing though on the LAN.

### [2-4. Advantages]

As described above, information processing system 110 according to this embodiment further includes determiner 142 that determines whether user 90 is present around outputter 144. Outputter 144 performs output when user 90 is determined to be present.

Accordingly, if user 90 is present around, effective notification is made to user 90. On the other hand, if user 90 is absent around, no output is performed, which reduces the power consumption.

For example, determiner 142 may determine that user 90 is present around outputter 144 in a predetermined period after input receiver 45 has received an instruction from user 90.

This configuration allows accurate determination on whether user 90 is present.

For example, determiner 142 may output a search signal for searching for a communication terminal carried by user 90, and determine that user 90 is present around outputter 144, when receiving a response signal to the search signal.

This configuration allows accurate determination on whether user 90 is present. In addition, utilizing the identification information peculiar to a communication terminal, whether user 90 is the specific user is determined. In this case, notification is made to the specific user, which further improves the convenience.

### (Embodiment 3)

Subsequently, Embodiment 3 will be described.

In the information processing system according to Embodiment 3, the complement of the instructions from user 90 is performed not by the information processing device but by the server device. Differences from Embodiment 1 will be mainly described below, and the description of the common points will be omitted or simplified.

### [3-1. Configuration]

FIG. 14 is a block diagram showing a functional configuration of information processing system 210 according to this embodiment. As shown in FIG. 14, information processing system 210 according to this embodiment differs from information processing system 10 shown in FIG. 2 as follows. In place of server device 30 and information processing device 40, server device 230 and information processing device 240 are included.

Unlike server device 30 shown in FIG. 2, server device 230 newly includes storage 235, complement request receiver 236, complement processor 237, and complement result transmitter 238. Storage 235 is a storage device such as a memory. Each of complement request receiver 236 and complement result transmitter 238 is configured as, for example, one or more communication interfaces for wired or wireless communications. Complement processor 237 includes, for example, a non-volatile memory storing programs, a volatile memory that is a temporary storage area for executing the programs, an input/output port, or a processor that executes the programs.

Storage 235 is the same as storage 42 included in information processing device 40 according to Embodiment 1. In this embodiment, information processing device 240 thus includes no storage 42.

Complement request receiver 236 receives complement requests from complement requestor 241 of information processing device 240. Specifically, complement request receiver 236 receives, as the complement requests, the analysis results transmitted by server device 50.

When complement requestor 241 has made a request, complement processor performs complement of an instruction using notification information. Specifically, the complement processor performs complement of the result of analyzing the instruction received by input receiver 45 based on the complementary information included in the notification information stored in storage 235. The complementary information used by complement processor 237 is included in the notification information used for determination on what has been output immediately before input receiver 45 receives the instruction in information processing device 240.

Complement result transmitter 238 transmits the results of the complement by complement processor 237 to information processing device 240.

Unlike information processing device 40 shown in FIG. 2, information processing device 240 newly includes complement requestor 241 and complement result obtainer 242. In addition, information processing device 240 includes instruction processor 248 in place of instruction processor 48.

Complement requestor 241 requests to complement the instructions received by input receiver 45. Specifically, complement requestor 241 requests to complement analysis results which are the results of the analysis by server device 50 on the instructions received by input receiver 45. For example, complement requestor 241 transmits an analysis result as a complement request to server device 230. At this time, complement requestor 241 may transmit the notification information associated with the immediately preceding output together with the analysis result.

Complement result obtainer 242 obtains the results of the complement by complement processor 237. Specifically, complement result obtainer 242 receives the complement results transmitted from server device 230.

Instruction processor 248 generates control commands to devices based on the complement results obtained by complement result obtainer 242.

### [3-2. Notification Information]

Next, specific examples of the notification information transmitted from server device 230 to information processing device 240 according to this embodiment will be described.

Each of FIGS. 15 to 17 shows an example of the notification information transmitted from server device 230 to information processing device 240 in information processing system 210 according to this embodiment.

As described above, information processing device 240 does not complement any instruction. Thus, the notification information may include no complementary information. For example, notification information A to C shown in FIG. 15 corresponds to notification information A to C shown in FIG. 3 without the complementary information. Specifically, notification information A to C shown in FIG. 15 includes the outlines of the instructions and the information about the content to be output.

Note that the notification information stored in storage 235 of server device 230 includes the complementary information like notification information A to C shown in FIG. 3, for example. At this time, the notification information stored in storage 235 may not include the information about the content to be output.

Notification information D to F shown in FIG. 16 may be transmitted from server device 230 to information processing device 240. Notification information D to F shown in FIG. 16 corresponds to notification information D to F shown in FIG. 4 without the complementary information, and includes the outlines of the instructions and information about the content to be output. The information about the content to be output includes storage information such as URLs.

Notification information G to I shown in FIG. 17 may be transmitted from server device 230 to information processing device 240. Notification information G to I shown in FIG. 17 corresponds to notification information G to I shown in FIG. 5 without the complementary information, and includes the outlines of the instructions and the information about the content to be output. The outlines of the instructions include no information about the content "team X".

### [3-3. Advantages]

As described above, in information processing system 210 according to this embodiment, information processing device 240 further includes complement requestor 241 that requests to complement an instruction received by input receiver 45. Server device 230 further includes complement processor 237 that performs complement of the instruction using notification information if requested by complement requestor 241. Information processing device 240 further includes complement result obtainer 242 that obtains the results of the complement by complement processor 237. Instruction processor 248 generates a control command based on the result obtained by complement result obtainer 242.

In this manner, information processing device 240 mainly has the input and out functions to user 90, whereas server device 230 has the processing functions such as the determination on the notification information and the complement of the instructions. In this manner, the functions are distributed in information processing system 210, which facilitates the maintenance of the system. In addition, information processing device 240 needs to have lower memory capacity, which reduces the size and power consumption of information processing device 240.

Note that information processing system 210 according to this embodiment operates similarly to information processing system 10 according to Embodiment 1. In addition, information processing system 210 may include determiner 142 according to Embodiment 2.

### [Embodiment 4]

Subsequently, Embodiment 4 will be described.

In the information processing system according to Embodiment 4, control commands are generated not by the information processing device but by the server device. Differences from Embodiment 1 will be mainly described below, and the description of the common points will be omitted or simplified.

### [4-1. Configuration]

FIG. 18 is a block diagram showing a functional configuration of information processing system 310 according to this embodiment. As shown in FIG. 18, information processing system 310 according to this embodiment differs from information processing system 10 shown in FIG. 2 as follows. In place of server device 30 and information processing device 40, server device 330 and information processing device 340 are included.

Unlike server device 30 shown in FIG. 2, server device 330 newly includes storage 235, complement processor 237, analysis result receiver 337, instruction processor 338, and instruction outputter 339. Storage 235 and complement processor 237 are the same as storage 235 and complement processor 237 according to Embodiment 3. Each of analysis result receiver 337 and instruction outputter 339 is configured as, for example, one or more communication interfaces for wired or wireless communications. Instruction processor 338 includes, for example, a non-volatile memory storing programs, a volatile memory that is a temporary storage area for executing the programs, an input/output port, or a processor that executes the programs.

Analysis result receiver 337 is the same as analysis result receiver 47 included in information processing device 40 according to Embodiment 1. Analysis result receiver 337 receives analysis results directly from analysis result transmitter 53 of server device 50 without passing through information processing device 40.

Instruction processor 338 is the same as instruction processor 248 included in information processing device 240 according to Embodiment 2.

Instruction outputter 339 is the same as instruction outputter 49 included in information processing device 40 according to Embodiment 1. In this embodiment, server device 330 and display device 60 are usually not present in the same space. Instruction outputter 339 thus transmits control commands to display device 60 through a communication network such as the Internet. That is, instruction outputter 339 transmits the control commands directly to display device 60 without passing through information processing device 40.

Unlike information processing device 40 shown in FIG. 2, information processing device 340 includes none of storage 42, analysis result receiver 47, instruction processor 48, and instruction outputter 49.

In this embodiment, notification information A to I shown in FIGS. 15 to 17 is, for example, transmitted from server device 330 to information processing device 340. That is, as in Embodiment 3, the notification information may include no complementary information.

### [4-2. Advantages]

As described above, in information processing system 310 according to this embodiment, server device 330 includes instruction processor 338. Server device 330 further includes complement processor 237 that performs complement of an instruction received by input receiver 45 using the notification information, and instruction outputter 339 that outputs a control command to a device. Instruction processor 338 generates the control command based on the result of the complement by complement processor 237.

Accordingly, the functions of information processing device 340 are limited to the input and output functions to user 90, which simplifies the configuration of information processing device 340. That is, a lot of functions of information processing system 310 are concentrated in server device 330, which facilitates the maintenance of the system. In addition, information processing device 340 needs to have a lower memory capacity, which reduces the size and power consumption of information processing device 340.

Note that information processing system 310 according to this embodiment operates similarly to information processing system 10 according to Embodiment 1. In addition, information processing system 310 may include determiner 142 according to Embodiment 2.

### [4-3. Variation]

Here, a variation of this embodiment will be described.

In an information processing system according to this variation, instructions to devices that are generated by a server device are transmitted to the devices via an information processing device. Differences from Embodiment 4 will be mainly described below, and the description of the common points will be omitted or simplified.

FIG. 19 is a block diagram showing a functional configuration of information processing system 310a according to this variation. As shown in FIG. 19, information processing system 310a according to this variation differs from information processing system 310 shown in FIG. 18 as follows. In place of server device 330 and information processing device 340, server device 330a and information processing device 340a are included.

Unlike server device 330 shown in FIG. 18, server device 330a includes instruction relay transmitter 339a in place of instruction outputter 339. Instruction relay transmitter 339a transmits the control commands generated by instruction processor 338 to information processing device 340. Instruction relay transmitter 339a is configured as, for example, one or more communication interfaces for wired or wireless communications.

Unlike information processing device 340 shown in FIG. 18, information processing device 340a further includes instruction relay receiver 348 and instruction outputter 49. Each of instruction relay receiver 348 and instruction outputter 49 is configured as, for example, one or more communication interfaces for wired or wireless communications.

Instruction relay receiver 348 receives the control commands transmitted from instruction relay transmitter 339a of server device 330a.

Instruction outputter 49 is the same as instruction outputter 49 included in information processing device 40 according to Embodiment 1. Instruction outputter 49 outputs the control commands received by instruction relay receiver 348 to the devices.

As described above, in information processing system 310a according to this variation, information processing device 340a transmits the control commands to display device 60. Accordingly, for example, even if display device 60 is not connected to the Internet, information processing device 340a transmits the control commands utilizing infrared light or other means so that display device 60 operates based on the instructions from a user.

### (Embodiment 5)

Subsequently, Embodiment 5 will be described.

In an information processing system according to Embodiment 5, a server device transmits notification information not only to an information processing device but also a mobile terminal carried by user 90. Differences from Embodiment 3 will be mainly described below, and the description of the common points will be omitted or simplified.

### [5-1. Configuration]

FIG. 20 is a block diagram showing a functional configuration of information processing system 410 according to this embodiment. As shown in FIG. 20, information processing system 410 according to this embodiment differs from information processing system 210 shown in FIG. 14 as follows. Server device 430 is included in place of server device 230, and communication terminal 470 is newly included.

Unlike server device 230 shown in FIG. 14, server device 430 includes notification information transmitter 434 in place of notification information transmitter 34. Notification information transmitter 434 is configured as a communication interface for wired or wireless communications, for example. Notification information transmitter 434 transmits notification information not only to information processing device 240 but also to communication terminal 470.

The notification information transmitted to communication terminal 470 is the same as that transmitted to information processing device 240. Alternatively, the information about the content to be output as indicated by the notification information transmitted to communication terminal 470 may be different from that as indicated by the notification information transmitted to information processing device 240. For example, the information about the content to be output as indicated by the notification information transmitted to communication terminal 470 may be, in place of sound or videos, text representing what is to be notified of and the display of a graphical user interface (GUI) for starting up application software.

In information processing system 410 according to this embodiment, not only information processing device 240 but also communication terminal 470 performs output based on the notification information. For example, communication terminal 470 outputs the sound or text indicating a chance of scoring during the broadcast of a match of favorite team X of user 90. In response, user 90 operates communication terminal 470 to start up application software for viewing TV programs being broadcasted or recorded TV programs to view the TV programs.

Specifically, communication terminal 470 is a terminal device, such as a smartphone or a tablet PC, portable by user 90. As shown in FIG. 17, communication terminal 470 includes obtainer 471, notification processor 472, outputter 473, input receiver 475, and controller 476.

Obtainer 471 is configured as, for example, one or more communication interfaces for wired or wireless communications. Obtainer 471 is the same as obtainer 41 according to Embodiments 1 to 4 and obtains notification information.

Notification processor 472 includes, for example, a non-volatile memory storing programs, a volatile memory that is a temporary storage area for executing the programs, an input/output port, or a processor that executes the programs. Notification processor 472 is the same as notification processor 43 according to Embodiment 1 to 4, and determines the content to be output based on the notification information.

As shown in FIG. 20, outputter 473 includes display 474. Although not shown, outputter 473 may include a speaker that outputs sound. Outputter 473 performs the output determined based on the notification information. For example, display 474 displays the text representing what is to be displayed and a GUI for starting up application software. The application software is for viewing programs being broadcasted or recorded programs, for example.

Input receiver 475 is a microphone, a touch sensor, or a physical button, for example. Input receiver 475 receives the instructions from user 90 to communication terminal 470. For example, input receiver 475 receives a selection operation on the GUI displayed on display 474.

Controller 476 includes, for example, a non-volatile memory storing programs, a volatile memory that is a temporary storage area for executing the programs, an input/output port, or a processor that executes the programs. Controller 476 controls communication terminal 470 based on what is instructed received by input receiver 475. For example, if a selection is made on the GUI, controller 476 starts up application software for viewing programs and displays the programs on display 474.

Note that information processing system 410 according to this embodiment operates similarly to information processing system 10 according to Embodiment 1.

### [5-2. Advantages]

As described above, information processing system 410 according to this embodiment includes communication terminal 470 that is portable by user 90 and communicative with server device 430. At this time, if determiner 142 determines that user 90 is absent, server device 430 may output notification information to communication terminal 470.

For example, information processing system 210 may include determiner 142 according to Embodiment 2. Notification information transmitter 434 may change the destination of notification information based on the result of determination on whether user 90 is present.

For example, if determiner 142 determines that user 90 is present around outputter 44, notification information transmitter 434 may transmit notification information to information processing device 240. If determiner 142 determines that the user is absent from outputter 44, notification information transmitter 434 may transmit notification information to communication terminal 470.

Accordingly, even if user 90 is absent from information processing device 240, notification is made to user 90 utilizing communication terminal 470. Notified user 90 takes a desired action, such as viewing a program, utilizing communication terminal 470.

### (Embodiment 6)

Subsequently, Embodiment 6 will be described.

An information processing system according to Embodiment 6 controls a home appliance based on notification information without receiving any input from a user. Differences from Embodiment 1 will be mainly described below, and the description of the common points will be omitted or simplified.

### [6-1. Configuration]

FIG. 21 is a block diagram showing a functional configuration of information processing system 510 according to this embodiment. As shown in FIG. 21, information processing system 510 according to this embodiment differs from information processing system 10 shown in FIG. 2 as follows. Information processing device 540 is included in place of information processing device 40, and no server device 50 is included.

Unlike information processing device 40 shown in FIG. 2, information processing device 540 includes analyzer 543 in place of notification processor 43, but none of input receiver 45, analysis requestor 46, and analysis result receiver 47.

Analyzer 543 analyzes notification information. Specifically, like notification processor 43 according to Embodiment 1, analyzer 543 analyzes the notification information to determine the content to be output by outputter 44. In addition, analyzer 543 analyzes the notification information to output, to instruction processor 48, analysis results for generating control commands to the appliance.

For example, if notification information A shown in FIG. 3 is obtained by obtainer 41, analyzer 543 determines, as the output, to play supporter's song Y of team X, and causes outputter 44 to output supporter's song Y. Further, analyzer 543 outputs, to instruction processor 48, "playing the broadcast of team X" and the fact that "channel 8 is broadcasting team X" as analysis results based on the outline of the instruction and complementary information included in notification information A. Analyzer 543 outputs the analysis results to instruction processor 48 without receiving any input from user 90.

Instruction processor 48 generates control commands to display device 60 based on the analysis results obtained from analyzer 543. Specifically, instruction processor 48 generates the control commands to turn on display device 60 and tune in reception channel 8. Since instruction outputter 49 outputs the generated control commands to display device 60, display device 60 displays a match video of team X broadcasted on channel 8.

Assume that notification information includes no complementary information indicating the channel, like notification information A shown in FIG. 15. In this case, analyzer 543 may communicate with a server device that holds electronic program guides via the Internet to obtain the information indicating the channel broadcasting team X. Alternatively, analyzer 543 may include a memory that stores electronic program guides and refer to the electronic program guides stored in the memory to obtain the information indicating the channel broadcasting team X.

### [6-2. Operation]

Subsequently, an operation of information processing system 510 according to this embodiment will be described with reference to FIG. 22. Note that server device 30 operates in the same manner as in Embodiment 1, and the description thereof will thus be omitted.

FIG. 22 is a flowchart showing an operation of information processing device 540 in information processing system 510 according to this embodiment. As shown in FIG. 22, after notification information has been obtained and stored (S20), analyzer 543 analyzes the notification information (S122). Specifically, analyzer 543 analyzes the notification information to determine the content to be output by outputter 44 and to output the results of the analysis on device control to instruction processor 48.

Next, outputter 44 performs the output as determined by analyzer 543 (S124). For example, if obtainer 41 obtains notification information A shown in FIG. 3, outputter 44 reads out supporter's song Y of team X from a storage (not shown) and outputs the song.

Next, instruction processor 48 generates a control command to a device based on the result of the analysis in step S122 (S126). For example, instruction processor 48 generates the control command to "turn on display device 60 and tune in reception channel 8" based on the analysis result.

Next, instruction outputter 49 outputs the control command to the device (S27). Specifically, instruction outputter 49 outputs the control command to display device 60. Display device 60 is turned on and displays a match video of team X broadcasted on channel 8 based on the control command to "turn on display device 60 and tune in reception channel 8".

Note that the output by outputter 44 may be performed at the same time as the output of the control command by instruction outputter 49. For example, when information processing device 540 outputs supporter's song Y, display device 60 may display the match video of team X broadcasted on channel 8.

### [6-3. Advantages]

As described above, in information processing system 510 according to this embodiment, information processing device 540 includes obtainer 41 that obtains notification information output when a predetermined condition is satisfied, outputter 44 that performs the output determined based on the notification information, and instruction processor 48 that generates a control command to a device. Instruction processor 48 generates the control command based on the notification information after the output is performed.

In this manner, information processing system 510 according to this embodiment controls devices without receiving any input from user 90. Accordingly, for example, when information processing device 540 obtains notification information, the channel of the program displayed by display device 60 is changed without any instruction by user 90. Before changing the channel, predetermined output such as the output of supporter's song is performed. User 90 easily notices that display device 60 will be controlled. This sufficiently reduces the possibility that user 90 misses a desired program.

On the other hand, the channel of a program may be changed forcibly against the user's will. To address the problem, for example, information processing device 540 may have the following operation modes. In a mode, no input from user 90 is needed as in Embodiment 6. In another mode, input from user 90 is needed as in Embodiments 1 to 6. For example, the operation mode may be switched based on instructions from user 90.

Accordingly, the operation mode is selectable, that is, switchable by user 90 between the following modes. In one mode, a forcible change in the programs is permitted, that is, a control command is output without any input from user 90. In the other mode, no forcible change in the programs is permitted, that is, an input by user 90 is waited for to output a control command. As a result, the information processing system can be achieved which is more convenient for users.

Information processing device 540 may include determiner 142 included in information processing device 140 according to Embodiment 2. If determiner 142 determines that user 90 is absent, information processing device 540 may stop not only the outputs by outputter 44 but also the output of the control commands by instruction outputter 49. For example, analyzer 543 of information processing device 540 may analyze notification information only when determiner 142 determines that user 90 is present. This configuration prevents or reduces the turn-on of display device 60 in the absence of user 90. Accordingly, information processing system 510 reduces excessive power consumption and operates efficiently.

### [Other Embodiments]

The embodiments have been described above as example techniques disclosed in the present application. However, the techniques of the present disclosure are not limited thereto, and also applicable to embodiments in which modifications, substitutions, additions and omissions are made as appropriate. The constituent elements described above in the embodiments may be combined to form further embodiments.

Other embodiments will now be illustrated below.

For example, while display device 60 has been described above in the embodiments, as an example of the device to be controlled, what is controlled is not limited thereto. For example, the device to be controlled may be a recoding and reproducing device that records and reproduces videos.

For example, the recoding and reproducing device records TV programs broadcasted while a user is absent. The notification information notified of in real time during the broadcast is stored in a storage of the information processing device. If a user is detected, the information processing device performs the output determined based on the notification information. The user makes an instruction in accordance with the output so that the recoding and reproducing device reproduces the scene corresponding to the notification information. Accordingly, the user easily views a desired scene.

A communication method between the devices described above in the embodiments are not particularly limited. Wireless communications may be established between the devices by means (i.e., the protocol) of near field wireless communication such as ZigBee (registered trademark), Bluetooth (registered trademark), or a wireless local area network (LAN). Alternatively, the means (i.e., the protocol) may be communication via a wide-area communication network such as the Internet. Between the devices, the wireless communications may be replaced with wired communications. Specifically, the wired communications may be power line communications (PLC) or communications using a wired LAN.

In the embodiments described above, the processing executed by a specific processor may be executed by another processor. In addition, the order of a plurality of processing may vary. Alternatively, a plurality of processing may be executed in parallel. How to distribute the constituent elements of the information processing system into a plurality of devices is a mere example. For example, the constituent elements of a device may be included in another device. The information processing system may be configured as a single device.

For example, the processing described above in the embodiments may be implemented as centralized processing using a single device (or system) or decentralized processing using a plurality of devices. A single processor or a plurality of processors may execute the programs described above. That is, centralized or decentralized processing may be performed.

In the embodiments described above, all or some of the constituent elements such as the controller may be configured as dedicated hardware or achieved by executing software programs suitable for the constituent elements. The constituent elements may be achieved by a program executor such as a central processing unit (CPU) or a processor reading out and executing software programs stored in a storage medium such as a hard disk drive (HDD) or a semiconductor memory.

The constituent elements such as the controller may be configured as one or more electronic circuits. The one or more electronic circuits may be general-purpose circuits or dedicated circuits.

The one or more electronic circuits may include semiconductor devices, integrated circuits (ICs) or a large-scale integrated (LSI) circuits, for example. The ICs or LSI circuits may be integrated in one or more chips. While the ICs or LSI circuits are named here, the integrated circuits may be referred to as system LSI circuits, very-large scale integrated (VLSI) circuits, or ultra-large scale integrated (ULSI) circuits depending on the degree of integration. A field programmable gate array (FPGA) programmable after the manufacture of an LSI circuit may be employed for the same purpose.

The general or specific aspects of the present disclosure may be implemented using a system, a device, a method, an integrated circuit, or a computer program. Alternatively, the general or specific aspects may be a non-transitory computer-readable recording medium, such as an optical disk, a HDD, or a semiconductor memory, storing computer programs. The general or specific aspects may be implemented using any combination of systems, devices, methods, integrated circuits, computer programs, or recording media.

The embodiments have been described above as example techniques of the present disclosure. The accompanying drawings and the detailed description have been provided for this purpose.

Accordingly, the constituent elements included in the accompanying drawings and the detailed description may include not only those essential to achieve the objective, but also those not essential to achieve the objective to illustrate the techniques described above. For this reason, these non-essential constituent elements should not be immediately construed as being essential based on the fact that they are included in the accompanying drawings or the detailed description.

The embodiments described above are for illustrating the techniques according to the present disclosure, and various modifications, substitutions, additions, and omissions can be thus made within the scope of the claims or a scope equivalent thereto.

### [Industrial Applicability]

The information processing system, for example, according to the present disclosure is applicable in controlling a home appliance, for example.

### [Reference Signs List]

10, 110, 210, 310, 310a, 410, 510 information processing system
20, 30, 50, 230, 330, 330a, 430 server device
31 information receiver
32 notification determiner
33 condition setter
34, 434 notification information transmitter
40, 140, 240, 340, 340a, 540 information processing device
41, 471 obtainer
42, 235 storage
43, 472 notification processor
44, 144, 473 outputter
45, 475 input receiver
46 analysis requestor
47, 337 analysis result receiver
48, 248, 338 instruction processor
49, 339 instruction outputter
51 analysis request receiver
52, 543 analyzer
53 analysis result transmitter
60 display device
90 user
142 determiner
236 complement request receiver
237 complement processor
238 complement result transmitter
241 complement requestor
242 complement result obtainer
339a instruction relay transmitter
348 instruction relay receiver
470 communication terminal
474 display
476 controller

## Claims

1. An information processing system, comprising:
a server device that outputs notification information when a predetermined condition is satisfied; and
an information processing device that communicates with the server device, wherein
the information processing device includes:
an obtainer that obtains the notification information output from the server device;
an outputter that performs output determined based on the notification information obtained by the obtainer; and
a receiver that receives an instruction from a user to a device,
the server device or the information processing device further includes:
an instruction processor that generates a control command to the device, and
the instruction processor generates the control command based on the instruction and the notification information when the receiver receives the instruction after the output is performed.

2. The information processing system according to claim 1, further comprising:
a determiner that determines whether the user is present around the outputter, wherein
the outputter performs the output, when the user is determined to be present.

3. The information processing system according to claim 2, wherein
the determiner determines that the user is present around the outputter in a predetermined period after the receiver has received the instruction from the user.

4. The information processing system according to claim 2, wherein
the determiner outputs a search signal for searching for a communication terminal carried by the user, and determines that the user is present around the outputter when receiving a response signal to the search signal.

5. The information processing system according to any one of claims 1 to 4, wherein
the notification information includes at least one of information about content to be output by the outputter, an outline of the instruction received by the receiver, or complementary information that complements the instruction, and
the instruction processor generates the control command based on the instruction and the complementary information.

6. The information processing system according to claim 5, wherein
the information about the content to be output includes storage information indicating a location where at least one of sound, an image, or a video is stored, and
the outputter obtains and outputs the at least one of the sound, the image, and the video stored in the location indicated by the storage information.

7. The information processing system according to any one of claims 1 to 6, wherein
the obtainer obtains a plurality of items of the notification information,
the information processing system further comprises a storage that stores the plurality of items of the notification information obtained by the obtainer, and
the outputter performs the output determined based on most recent notification information out of the plurality of items of the notification information stored in the storage.

8. The information processing system according to any one of claims 1 to 7, wherein
the information processing device includes:
the instruction processor; and
an instruction outputter that outputs the control command to the device.

9. The information processing system according to claim 8, wherein
the information processing device further includes a complement requestor that requests to complement the instruction received by the receiver,
the server device further includes a complement processor that performs complement of the instruction using the notification information when requested by the complement requestor,
the information processing device further includes a complement result obtainer that obtains a result of the complement by the complement processor, and
the instruction processor generates the control command based on the result obtained by the complement result obtainer.

10. The information processing system according to any one of claims 1 to 7, wherein
the server device includes:
the instruction processor;
a complement processor that performs complement of the instruction received by the receiver, using the notification information; and
an instruction outputter that outputs the control command to the device, and
the instruction processor generates the control command based on a result of the complement by the complement processor.

11. The information processing system according to any one of claims 1 to 10, further comprising:
a communication terminal portable by the user and communicative with the server device, wherein
the server device outputs the notification information to the communication terminal, when the determiner determines that the user is absent.

12. An information processing device, comprising:
an obtainer that obtains notification information output when a predetermined condition is satisfied;
an outputter that performs output determined based on the notification information;
a receiver that receives an instruction from a user to a device; and
an instruction processor that generates a control command to the device, wherein
the instruction processor generates the control command based on the instruction and the notification information, when the receiver receives the instruction after the output is performed.

13. An information processing device, comprising:
an obtainer that obtains notification information output when a predetermined condition is satisfied;
an outputter that performs output determined based on the notification information; and
an instruction processor that generates a control command to a device, wherein
the instruction processor generates the control command based on the notification information after the output is performed.

14. An information processing method, comprising:
obtaining notification information output when a predetermined condition is satisfied;
performing output determined based on the notification information;
receiving an instruction from a user to a device; and
generating a control command to the device, wherein
the generating includes generating the control command based on the instruction and the notification information, when the instruction is received after the output is performed.
